# FASCICULE DE BREVET EUROPEEN

(11) **EP 0 323 349 B1**
(45) Date de publication et mention de la délivrance du brevet: **16.06.1993**
(21) Numéro de dépôt: 88403336.6
(22) Date de dépôt: 27.12.1988
(51) Int. Cl.: C23D 5/00, C03C 8/14, A47J 36/02

(54) **Revêtement d'émail chargé de billes de verre pour fond d'ustensiles de cuisson et ustensiles ainsi revêtus**
Mit Glasperlen gefüllte Email-Beschichtung für Kochgeräte und so bekleidete Kochgeräte
Enamel coating charged with glass pearls for cooking utensils, and utensils coated therewith

(30) Priorité: 30.12.1987 FR 8718380; 30.12.1987 FR 8718381; 30.12.1987 FR 8718382
(43) Date de publication de la demande: 05.07.1989
(73) Titulaire: SEB S.A., F-21260 Selongey (FR)
(72) Inventeur: Piera, Henri, F-74000 Annecy (FR)
(74) Mandataire: Keib, Gérard

(56) Documents cités:
- DE-A- 3 507 595
- FR-A- 2 576 038
- GB-A- 2 063 246
- GB-A- 2 138 417
- US-A- 3 497 376

## Description

La présente invention concerne un revêtement d'émail pour fond d'ustensile de cuisson, tel que poêle à frire, casserole, sauteuse ou analogue.

L'invention vise également les ustensiles de cuisson comportant un tel revêtement d'émail.

On connaît selon le brevet français n^{o} 2 544 338 de la demanderesse un revêtement pour fond d'ustensiles de cuisson qui comprend une première couche d'émail qui recouvre complètement le fond de l'ustensile qui est recouverte par une seconde couche discontinue d'émail constituant un décor qui est appliquée par sérigraphie, après séchage de la première couche d'émail. Ces deux couches d'émail sont obtenues à partir d'une fritte d'émail et sont cuites simultanément.

Cette cuisson simultanée des deux couches d'émail permet d'obtenir une adhérence exceptionnelle des deux couches et une excellente résistance de celles-ci aux sévères chocs thermiques auxquels est exposé le revêtement d'émail.

La couche extérieure discontinue qui constitue un décor, permet non seulement d'améliorer l'esthétique du fond de l'ustensile, mais constitue également une couche d'usure qui préserve la couche d'émail sous-jacente à l'égard des chocs et des rayures. En effet, le relief de cette couche de décor est susceptible de s'user sans que cette usure dégrade trop l'aspect esthétique du revêtement d'émail.

Néanmoins, en raison du caractère discontinu de cette couche extérieure d'émail, celle-ci s'use trop rapidement, notamment lorsque cet émail est obtenu à partir d'une fritte d'émail pour aluminium qui présente une dureté nettement inférieure à celle des émaux pour ustensiles en acier ou en fonte.

Pour remédier à cette dureté relativement faible et pour augmenter la résistance à l'usure de la couche extérieure d'émail en relief, la demanderesse a proposé dans son brevet français n^{o} 2 544 338 de charger cette couche d'émail de particules dures et anguleuses telles que de l'alumine, du carbure de silicium et analogues dont certaines font saillie à la surface de la couche d'émail.

Toutefois, ces particules dures et anguleuses en saillie à la surface de l'émail augmentent considérablement le coefficient de frottement de cette surface de sorte que celle-ci est difficile à nettoyer. De plus, ces particules en s'usant confèrent au décor d'émail en relief un aspect inesthétique.

On connait selon le brevet français FR-A-2 576 038 de la Demanderesse, un revêtement formé de deux couches d'émail contenant des billes de verre dont au moins certaines ont un diamètre supérieur à l'épaisseur de la couche d'émail qui les renferme et font saillie à la surface de ces couches. Cependant, les billes de verre de la seconde couche sont disposées en quinconce par rapport aux billes de verre de la première couche. Il est donc difficile de contrôler l'enfoncement des billes dans la deuxième couche, ces billes ayant tendance à s'enfoncer entre les billes de verre de la première couche et à ne pas être en saillie sur la couche extérieure. La résistance à l'usure du revêtement est donc diminuée.

Par ailleurs, le revêtement d'émail du fait de ses propriétés isolantes affecte la transmission de la chaleur à travers le fond de l'ustensile de cuisson.

Le document GB-A-2 063 246 décrit un revêtement d'émail contenant des particules de mica finement dispersées, ce qui permet d'augmenter la transmission de la chaleur. Mais cette répartition aléatoire des particules de mica dans l'émail ne permet pas d'assurer une bonne répartition de la chaleur sur toute la surface du fond de l'ustensile.

Le but de la présente invention est de remédier aux inconvénients des revêtements d'émail précités.

L'invention vise un revêtement d'émail pour ustensiles de cuisson comprenant une première couche d'émail recouverte dans la zone du fond, après séchage de la première couche, par une seconde couche d'émail elle-même recouverte par une troisième couche discontinue d'émail constituant un décor, appliquée par sérigraphie après séchage de la première couche, ces trois couches étant obtenues à partir d'une fritte d'émail et étant cuites simultanément et les seconde et troisième couches d'émail renfermant des billes de verre dont au moins certaines ont un diamètre supérieur à l'épaisseur de la couche d'émail qui les renferme et font saillie à la surface de ces couches.

Suivant l'invention, ce revêtement d'émail est caractérisé en ce que certaines des billes de la troisième couche discontinue sont en appui sur des billes de la seconde couche et en ce que la seconde couche d'émail renferme des paillettes conductrices de la chaleur et orientées parallèlement les unes aux autres et à la surface de cette couche et se recouvrant partiellement les unes sur les autres.

Les billes de verre en saillie à la surface de la couche extérieure discontinue d'émail permettent à la fois d'augmenter la résistance à l'usure de cette couche et de réduire le coefficient de frottement de celle-ci, de sorte que cette dernière est facilement nettoyable et ne risque pas de rayer des surfaces sensibles.

Par ailleurs, la demanderesse a constaté de façon surprenante que les billes de verre malgré leur surface lisse et donc peu favorable à l'égard de leur ancrage dans l'émail étaient solidement ancrées du fait que l'émail de la couche extérieure discontinue est appliquée par sérigraphie. En effet, la sérigraphie consiste à appliquer une pâte d'émail à travers les mailles d'un écran, au moyen d'une râcle qui a pour effet d'enfoncer les billes dans la couche d'émail.

De plus, cet enfoncement des billes dans la couche extérieure discontinue est contrôlé par la présence de billes de verre dans la couche d'émail sous-jacente sur lesquelles peuvent prendre appui au moins certaines des billes de la couche d'émail extérieure.

D'autre part, les billes de verre présentes dans la couche d'émail sous-jacente permettent d'augmenter la résistance à l'usure et de faciliter le nettoyage des parties de cette couche qui ne sont pas recouvertes par la couche extérieure discontinue.

L'orientation parallèle des paillettes est obtenue sous l'effet de la râcle sérigraphique.

Ces paillettes orientées parallèlement à la surface de la couche d'émail, forment au sein de celle-ci un écran conducteur de la chaleur qui assure une répartition uniforme de la chaleur sur toute la surface du fond de l'ustensile et augmente considérablement la transmission de la chaleur à travers le revêtement d'émail.

Ainsi, l'association de ladite seconde couche continue d'émail et de ladite troisième couche discontinue permet d'obtenir un effet global qui ne pourrait être obtenu avec une couche unique renfermant à la fois des billes et des paillettes.

En effet, les paillettes ne pourraient pas être incorporées à la troisième couche discontinue seule, car dans ce cas l'adhérence de cette couche serait insuffisante. De plus, les propriétés thermiques ne seraient pas améliorées en raison du caractère discontinu de la couche. Ces propriétés sont obtenues seulement lorsque la seconde couche continue renferme des paillettes.

De préférence, la seconde couche d'émail est également appliquée par sérigraphie, ce qui permet également de contrôler avec précision l'enfoncement des billes de verre dans cette première couche d'émail.

Selon une version préférée de l'invention, le diamètre maximum des billes est au plus égal à deux fois l'épaisseur de la couche d'émail qui les renferme.

Ainsi, toutes les billes de verre sont engagées dans la couche d'émail suivant une profondeur qui est au moins égale à leur diamètre, ce qui assure un excellent ancrage de ces billes dans la couche d'émail.

Selon une version avantageuse de l'invention, le diamètre des billes de verre est compris entre 5 et 40 microns, le diamètre moyen de ces billes étant compris entre 15 et 20 microns (µm).

L'épaisseur de chaque couche d'émail est comprise entre 20 et 25 microns (µm).

De préférence, chaque couche d'émail renferme entre 5 et 20% en poids de billes de verre.

En-dessous de 5% de billes de verre, l'effet de celles-ci sur les propriétés de l'émail devient négligeable, tandis qu'au-dessus de 20% la cohésion entre les billes et l'émail est altérée.

De préférence, la seconde couche d'émail renferme entre 2 et 10% en poids de paillettes.

En-dessous de 2% de paillettes, l'effet de celles-ci devient négligeable tandis qu'au-dessus de 10% la présence de celles-ci risque d'altérer la cohésion de la couche d'émail.

Ces paillettes sont de préférence en mica recouvertes par une fine couche de TiO₂ et/ou de Fe₂O₃. Celles-ci présentent une couleur cuivrée qui donne au revêtement d'émail un aspect esthétique très attrayant.

Les seconde et troisième couches d'émail renferment avantageusement des particules solides de structure lamellaire ayant des propriétés lubrifiantes telles que talc, graphite, bisulfure, de molybdène, bisulfure de vanadium, nitrure de bore, etc. et leurs mélanges.

Ces particules de structure lamellaire, réduisent notablement le coefficient de friction du revêtement d'émail et diminuent ainsi considérablement l'effet abrasif de la plaque de cuisson sur l'ustensile.

Dans le cas de la couche discontinue extérieure, ces particules lubrifiantes complètent l'action des billes et prennent le relais de celles-ci lorsqu'elles sont usées jusqu'à la surface de la couche.

D'autres particularités et avantages de l'invention apparaîtront encore dans la description ci-après.

Aux dessins annexés donnés à titre d'exemples non limitatif:
- la figure 1 est une vue en coupe partielle du fond d'un ustensile de cuisson comportant un revêtement d'émail conforme à l'invention,
- la figure 2 est une vue à plus grande échelle du détail A de la figure 1.

Aux dessins annexés, on a représenté le fond 1, par exemple en aluminium, d'un récipient de cuisson dont la surface intérieure (celle en contact avec les aliments) est recouverte par une couche 2 antiadhésive par exemple en polytétrafluoréthylène.

La surface extérieure du fond 1 est recouverte par un revêtement d'émail conforme à l'invention composé de trois couches 7, 3 et 4. La première couche d'émail 7 recouvre toute la surface extérieure de l'ustensile, tandis que les des couches d'émail 3 et 4 sont appliquées uniquement dans la zone du fond 1 de l'ustensile.

Les trois couches d'émail 7, 3 et 4 sont obtenues à partir d'une fritte d'émail frittable à une température de l'ordre de 500 à 600°C compatible avec le point de fusion de l'aluminium.

La première couche 7 est appliquée par pulvérisation à partir d'une barbotine aqueuse de fritte d'émail. La seconde couche d'émail 3 ainsi que la troisième 4 qui est discontinue et constitue un décor en relief sont appliquées par sérigraphie après séchage de la première couche 7, et les trois couches sont cuites simultanément.

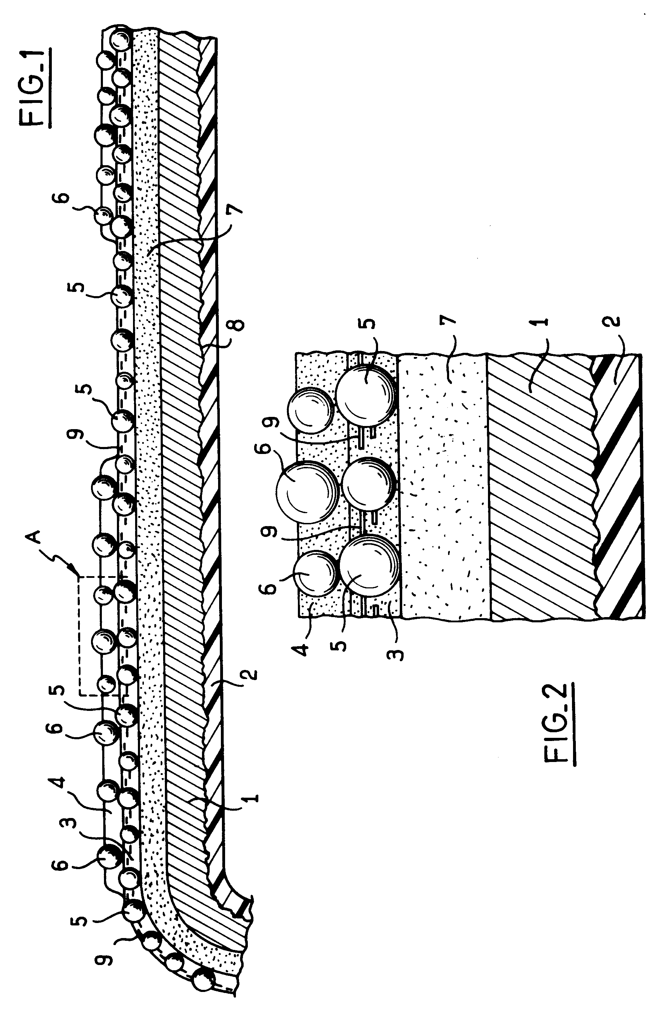

Les deux couches d'émail 3, 4 renferment des billes de verre 5, 6 dont au moins certaines ont un diamètre supérieur à l'épaisseur de ces couches d'émail 3, 4 et font saillie à la surface de celles-ci. On voit également sur les figures 1 et 2 qu'au moins certaines des billes 6 de la couche extérieure 4 sont en appui sur des billes 5 de la seconde couche.

Lors de cette application par sérigraphie, la pâte renferment la fritte d'émail et les billes 5 et 6 est poussée à travers les mailles d'un écran au moyen d'une râcle qui enfonce les billes 5, 6 dans leur couche respective d'émail. Ainsi, les billes 5 de la seconde couche 3 prennent appui sur la surface de la première couche d'émail 7, tandis que les billes 6 de la troisième couche 4 prennent appui sur les billes 5 de la seconde couche 3.

Le diamètre maximum des billes 5, 6 est au plus égal à deux fois l'épaisseur des couches d'émail 3, 4.

Le diamètre de ces billes 5, 6 est de préférence compris entre 5 et 40 microns, leur diamètre moyen étant compris entre 15 et 20 microns, tandis que l'épaisseur de chaque couche d'émail 3, 4 est de préférence comprise entre 20 et 25 microns.

Ainsi, au moins certaines des billes 5, 6 font saillie à la surface des couches d'émail 3, 4. Toutefois toutes les billes sont engagées dans l'émail sur une profondeur qui est au moins égale à leur diamètre. Il en résulte donc que les billes 5, 6 sont parfaitement ancrées dans l'émail.

Chaque couche d'émail 3, 4 renferme entre 5 et 20% en poids de billes de verre.

Lors de l'application de la troisième couche d'émail 4 les billes 6 de celle-ci ne peuvent s'enfoncer dans la deuxième couche d'émail 3, car les billes 5 contenues dans celle-ci limitent l'enfoncement des billes 6. Les billes en verre 6 de la couche extérieure d'émail 4 permettent à celle-ci de résister à l'usure en préservant ainsi l'aspect esthétique du décor en relief formé par cette couche 4.

De plus, les billes 6 grâce à leur surface lisse en saillie confèrent à la couche d'émail 4 des propriétés anti-adhésives qui facilitent considérablement le nettoyage de cette couche.

Les billes 5 outre les propriétés indiquées plus haut protègent contre l'usure les parties de la couche d'émail 3 qui ne sont pas recouvertes par la couche discontinue 4, tout en facilitant le nettoyage de ces parties.

Conformément à une autre particularité importante de la présente invention, la seconde couche d'émail 3 renferme des paillettes 9 qui sont orientées parallèlement les unes aux autres et à la surface de cette couche 3. De plus, elles se recouvrent au moins partiellement à la manière des ardoises d'un toit.

Cette seconde couche d'émail 3 renferme entre 2 et 10% en poids de particules 9. Ces paillettes 9 sont de préférence constituées de lamelles en mica recouvertes par une fine couche de TiO₂ et/ou de Fe₂O₃, ce qui leur donne un aspect métallique cuivré.

Ces paillettes 9 ont une longueur comprise entre 10 et 70 microns et une épaisseur moyenne de l'ordre de 2 microns. L'orientation parallèle des paillettes 9 est obtenue sous l'effet de la râcle utilisée pour appliquer la couche d'émail 3.

Ces paillettes 9 ont pour effet:
- d'une part d'augmenter la conductibilité thermique du revêtement d'émail et d'assurer une répartition uniforme de la chaleur sur toute la surface du fond 1 de l'ustensile, et
- d'autre part d'augmenter la résistance au tachage de la couche d'émail 3; en effet, l'écran formé par les paillettes 9 masque les impuretés qui auraient pu s'infiltrer dans les pores de la couche d'émail 3.

Les deux couches d'émail 3, 4 renferment de préférence également des particules solides de structure lamellaire ayant des propriétés lubrifiantes telles que talc, graphite, bisulfure de molybdène, bisulfure de vanadium, nitrure de bore, etc. et leurs mélanges.

Ces particules lubrifiantes facilitent l'application des couches d'émail 3, 4 par sérigraphie et augmentent les propriétés anti-adhésives de celles-ci.

On donne ci-après un exemple de mise en oeuvre du revêtement d'émail conforme à l'invention.

On pulvérise sur la surface extérieure de l'ustensile une barbotine de fritte d'émail pour constituer la première couche 7. Après séchage de cette première couche 7, on applique sur celle-ci dans la zone du fond 1, par sérigraphie, une seconde couche d'émail 3, sous la forme d'une pâte huileuse qui renferme:
a) 100 parties en poids d'une fritte d'émail pour aluminium renfermant par exemple:
   34% de SiO₂
   20% de Na₂2
   10% de K₂O
   2% de Li₂O
   20% de TiO₂
   2% de Al₂O₃
   2% de P₂O₅
   10% de V₂O₅
b) 0 à 5 parties de pigments minéraux résistant à une température au moins égale à 600°C.
c) 2 à 10 parties de paillettes de mica enrobées de Ti0₂ et de Fe₂0₃ et de longeuer comprise entre 10 et 70 microns (µm),
d) 5 à 20 parties de billes de verre de diamètre compris entre 5 et 40 microns (µm), leur diamètre moyen étant compris entre 15 et 20 microns (µm),
e) 25 à 45 parties d'huile de pin et
f) 2 à 10 parties de talc, de graphite ou de bisulfure de molybdène.

Cette couche est séchée. Après séchage, le biscuit d'émail sec obtenu a une épaisseur de l'ordre de 25 à 30 microns (µm).

Sur ce biscuit d'émail on applique par sérigraphie une troisième couche d'émail discontinue ayant la même composition que la seconde couche mais dépourvue de paillettes.

Les trois couches d'émail ainsi obtenues sont cuites simultanément à une température de l'ordre de 550°C.

Le revêtement d'émail ainsi obtenu présente une excellente résistance aux chocs thermiques (chauffage à 400°C puis plongée dans l'eau froide).

## Revendications

1. Revêtement d'émail pour ustensiles de cuisson comprenant une première couche d'émail (7) recouverte dans la zone du fond (1), après séchage de la première couche, par une seconde couche d'émail (3) elle-même recouverte par une troisième couche discontinue d'émail (4) constituant un décor, appliquée par sérigraphie après séchage de la première couche, ces trois couches (7, 3, 4) étant obtenues à partir d'une fritte d'émail et étant cuites simultanément, et les seconde et troisième couches d'émail (3, 4) renfermant des billes de verre (5, 6) dont au moins certaines ont un diamètre supérieur à l'épaisseur de la couche d'émail qui les renferme et font saillie à la surface de ces couches, caractérisé en ce que certaines des billes (6) de la troisième couche discontinue (4) sont en appui sur des billes (5) de la seconde couche (3) et en ce que la seconde couche d'émail (3) renferme des paillettes (9) conductrices de la chaleur orientées parallèlement les unes aux autres et à la surface de cette couche et se recouvrant partiellement les unes sur les autres.

2. Revêtement d'émail conforme à la revendication 1, caractérisé en ce que les seconde et troisième couches (3, 4) sont appliquées par sérigraphie.

3. Revêtement d'émail conforme à l'une des revendications 1 ou 2, caractérisé en ce que le diamètre maximum des billes (5, 6) est au plus égal à deux fois l'épaisseur de la couche d'émail (3, 4) qui les renferme.

4. Revêtement d'émail conforme à l'une des revendications 1 à 3, caractérisé en ce que le diamètre des billes de verre (5, 6) est compris entre 5 et 40 microns (µm) le diamètre moyen de ces billes étant compris entre 15 et 20 microns (µm).

5. Revêtement d'émail conforme à la revendication 4, caractérisé en ce que l'épaisseur des seconde et troisième couches d'émail (3, 4) est comprise entre 20 et 25 microns (µm).

6. Revêtement d'émail conforme à l'une des revendications 1 à 5, caractérisé en ce que chaque couche d'émail (3, 4) renferme entre 5 et 20% en poids de billes de verre.

7. Revêtement d'émail conforme à l'une des revendications 1 à 6, caractérisé en ce que la seconde couche d'émail (3) renferme entre 2 et 10% en poids de paillettes (9).

8. Revêtement d'émail conforme à l'une des revendications 1 à 7, caractérisé en ce que les paillettes (9) sont en mica recouvert par une fine couche de TiO₂ et/ou de Fe₂O₃.

9. Revêtement d'émail conforme à l'une des revendications 1 à 8, caractérisé en ce que les paillettes (9) ont une longueur comprise entre 10 et 70 microns (µm) et une épaisseur moyenne de l'ordre de 2 microns (µm).

10. Revêtement d'émail conforme à l'une des revendications 1 à 9, caractérisé en ce que les deux couches d'émail (3, 4) renferment des particules solides de structure lamellaire ayant des propriétés lubrifiantes.

11. Revêtement d'émail conforme à la revendication 10, caractérisé en ce que les particules solides de structure lamellaire sont choisies parmi les composés suivantes : talc, graphite, bisulfure de molybdène, bisulfure de vanadium, nitrure de bore et leurs mélanges.

12. Ustensile de cuisson comportant un revêtement d'émail conforme à l'une des revendications 1 à 11.

## Claims

1. An enamel coating for kitchen utensils and comprising a first enamel layer (7) which, after drying thereof, is covered in the bottom (1) area by a second enamel layer (3) which in turn is covered by a third discontinuous enamel layer (4) constituting a decoration and applied by silk screen printing after drying of the first layer, the three layers (7, 3, 4) being obtained from an enamel frit and stoved simultaneously, and the second and third enamel layers (3, 4) containing glass balls (5, 6), at least some of which have a diameter greater than the thickness of the enamel layer containing them and project from the surface of these layers, characterised in that some of the balls (3) in the discontinuous third layer (4) bear against the balls (5) in the second layer (3), and the second enamel layer (3) contains heat-conducting flakes (9) oriented parallel to one another and to the surface of the layer and partially overlapping one another.

2. An enamel coating according to claim 1, characterised in that the second and third layers (3, 4) are applied by silk screen printing.

3. An enamel coating according to claim 1 or 2, characterised in that the maximum diameter of the balls (5, 6) is not more than twice the thickness of the enamel layer (3, 4) containing them.

4. An enamel coating according to any of claims 1 to 3, characterised in that the diameter of the glass balls (5, 6) is between 5 and 40 microns (µm), the average diameter of the balls being between 15 and 20 microns (µm).

5. An enamel coating according to claim 4, characterised in that the thickness of the second and the third enamel layers (3, 4) is between 20 and 25 microns (µm).

6. An enamel coating according to any of claims 1 to 5, characterised in that each enamel layer (3, 4) contains between 5 and 20% by weight of glass balls.

7. An enamel layer according to any of claims 1 to 6, characterised in that the second enamel layer (3) contains between 2 and 10% by weight of flakes (9).

8. An enamel layer according to any of claims 1 to 7, characterised in that the flakes (9) are of mica covered by a thin layer of TiO₂ and/or Fe₂O₃.

9. An enamel coating according to any of claims 1 to 8, characterised in that the flakes (9) have a length between 10 and 70 microns (µm) and an average thickness of about 2 microns (µm).

10. An enamel coating according to any of claims 1 to 9, characterised in that the two enamel layers (3, 4) contain solid particles of lamellar structure having lubricating properties.

11. An enamel coating according to claim 10, characterised in that the solid particles of lamellar structure are chosen from among the following compounds: talc, graphite, molybdenum disulphide, vanadium disulphide, boron nitride and mixtures thereof.

12. A kitchen utensil comprising an enamel coating according to any of claims 1 to 11.

## Patentansprüche

1. Emailbeschichtung für Kochgeräte, mit einer ersten Emailschicht (7), die in der Bodenzone (1) nach dem Trocknen der ersten Schicht von einer zweiten Emailschicht (3) überzogen ist, welche ihrerseits von einer dritten, einen Dekor bildenden diskontinuierlichen Emailschicht (4) überzogen ist, die nach dem Trocknen der ersten Schicht durch Siebdruck aufgebracht ist, wobei diese drei Schichten (7, 4) ausgehend von einer Emailfritte erhalten und gleichzeitig eingebrannt werden und die zweite Emailschicht (3) sowie die dritte Emailschicht (4) Glaskugeln (5, 6) enthalten, wovon wenigstens einige einen Durchmesser haben, der größer als die Dicke der sie einschließenden Emailschicht ist, und aus der Oberfläche dieser Schichten herausragen, dadurch gekennzeichnet, daß einige der Kugeln (6) der diskontinuierlichen dritten Schicht (4) sich auf Kugeln (5) der zweiten Schicht (3) abstützen und daß die zweite Emailschicht (3) wärmeleitende Schuppen (9) enthält, die zueinander und zu der Oberfläche dieser Schicht parallel orientiert sind und sich teilweise überdecken.

2. Emailbeschichtung nach Anspruch 1, dadurch gekennzeichnet, daß die zweite Schicht (3) sowie die dritte Schicht (4) durch Siebdruck aufgebracht sind.

3. Emailbeschichtung nach einem der Ansprüche 1 oder 2, dadurch gekennzeichnet, daß der maximale Durchmesser der Kugeln (5, 6) höchstens zweimal der Dicke der sie einschließenden Emailschicht (3, 4) entspricht.

4. Emailbeschichtung nach einem der Ansprüche 1 bis 3, dadurch gekennzeichnet, daß der Durchmesser der Glaskugeln (5, 6) zwischen 5 und 40 Mikrometern (µm) enthalten ist, wobei der Durchschnittsdurchmesser dieser Kugeln zwischen 15 und 20 Mikrometern (µm) enthalten ist.

5. Emailbeschichtung nach Anspruch 4, dadurch gekennzeichnet, daß die Dicke der zweiten (3) und dritten Emailschicht (4) zwischen 20 und 25 Mikrometern (µm) enthalten ist.

6. Emailbeschichtung nach einem der Ansprüche 1 bis 5, dadurch gekennzeichnet, daß jede Emailschicht (3, 4) zwischen 5 und 20 Gew. % Glaskugeln enthält.

7. Emailbeschichtung nach einem der Ansprüche 1 bis 6, dadurch gekennzeichnet, daß die zweite Emailschicht (3) zwischen 2 und 10 Gew. % Schuppen (9) enthält.

8. Emailbeschichtung nach einem der Ansprüche 1 bis 7, dadurch gekennzeichnet, daß die Schuppen (9) aus Glimmer bestehen, das von einer dünnen Schicht aus TiO₂ und/oder aus Fe₂O₃ überzogen ist.

9. Emailbeschichtung nach einem der Ansprüche 1 bis 8, dadurch gekennzeichnet, daß die Schuppen (9) eine zwischen 10 und 70 Mikrometern (µm) enthaltene Länge sowie eine Durchschnittsdicke in der Größenordnung von 2 Mikrometern (µm) aufweisen.

10. Emailbeschichtung nach einem der Ansprüche 1 bis 9, dadurch gekennzeichnet, daß die beiden Emallschichten (3, 4) feste Partikel mit Lamellenstruktur, die Schmiereigenschaften aufweisen, enthalten.

11. Emailbeschichtung nach Anspruch 10, dadurch gekennzeichnet, daß die festen Partikel mit Lamellenstruktur aus den folgenden Verbindungen ausgewählt sind: Talkum, Graphit, Molybdänbisulfid, Vanadiumbisulfid, Bornitrid und deren Gemische.

12. Kochgerät mit einer Emailbeschichtung nach einem der Ansprüche 1 bis 11.
